# EUROPÄISCHE PATENTSCHRIFT

(11) **EP 1 984 666 B1**
(45) Veröffentlichungstag und Bekanntmachung des Hinweises auf die Patenterteilung: **13.06.2012**
(21) Anmeldenummer: 07703316.5
(22) Anmeldetag: 07.02.2007
(51) Int. Cl.: F16L 23/028

(54) **ROHRANSCHLUSSVORRICHTUNG**
PIPE CONNECTION DEVICE
DISPOSITIF DE CONNEXION DE TUYAUX

(30) Priorität: 17.02.2006 DE 102006007425
(43) Veröffentlichungstag der Anmeldung: 29.10.2008
(73) Patentinhaber: Parker Hannifin Manufacturing Germany GmbH & Co. KG, 33659 Bielefeld (DE)
(72) Erfinder: SCHULZE, Dieter, 33330 Gütersloh (DE); RUTZ, Peter, 33813 Oerlinghausen (DE); STEINMEYER, Norbert, 32791 Lage (DE); ZIEHL, Martin, 33161 Hövelhof (DE); UDHÖFER, Andreas, 33334 Gütersloh (DE)
(74) Vertreter: Müller, Karl-Ernst
(86) Internationale Anmeldenummer: PCT/EP2007/001027
(87) Internationale Veröffentlichungsnummer: WO 2007/093309

(56) Entgegenhaltungen:
- DE-A1- 3 543 539
- DE-A1- 19 507 854
- DE-C- 615 712
- DE-C- 860 583
- DE-U1- 8 503 342
- DE-U1- 8 707 154
- GB-A- 416 733
- US-A- 1 820 020
- US-A- 3 537 731

## Beschreibung

Die Erfindung betrifft eine Rohranschlussvorrichtung umfassend eine Flanschverbindung mit einem Rohr, einem auf der Außenseite des anzuschlie-βenden Rohres angeordneten, mittels wenigstens zweier Schrauben an ein Gegenstück anschraubbaren Flanschteil und mit einem in das mit einer Aufweitung versehene Ende des anzuschließenden Rohres eingesteckten hülsenförmigen Einsatzstück, welches in seiner Außenkontur an die Kontur der Aufweitung des Rohrendes angepasst ist und an seiner äußeren Stirnfläche die Anschlussfläche für die Rohrverbindung ausbildet, wobei der anschraubbare Flanschteil einen zusätzlich außen auf das aufgeweitete Rohrende aufgeschobenen, in seiner Innenkontur an die Kontur der Aufweitung des Rohrendes angepassten Klemmring übergreift.

Eine Schraubverbindung aufweisende Flanschverbindungen sind beispielsweise aus den ISO-Normen 6162 beziehungsweise 6164 bekannt. Derartige Flanschverbindungen sind sowohl zur Verbindung zweier Rohrenden miteinander als auch zur Verbindung eines Rohrendes mit einem Anschlussblock, beispielsweise mit einem Ventilblock, geeignet und vorgesehen. Bei den bekannten Flanschverbindungen sitzen jeweils genormte ISO-Flanschteile auf einem mit einer dem ISO-Flanschteil entsprechenden gestuften Außenkontur geformten Rohrendstück, welches mit dem anzuschließenden Rohr im Wege einer Rohr-an-Rohr-Schweißverbindung verbunden ist. Hiermit ist der Nachteil verbunden, dass die Herstellung der Rohrendstücke wie auch deren Anschweißen an das anzuschließende Rohr aufwendig ist, wobei die notwendige Schweißverbindung eine gewisse Schwachstelle beim späteren Einsatz der Rohr-Flansch-Verbindung darstellt.

Eine Flanschverbindung anderer Bauart mit einem von den ISO-Normen abweichenden Flanschteil ist in der GB PS 1 232 938 beschrieben. Bei der bekannten Rohrverbindung ist das Ende des anzuschließenden Rohres mit einer konisch ausgebildeten Aufweitung versehen, in die ein eine konische Außenfläche aufweisendes Einsatzstück eingesteckt ist. Das Einsatzstück ist hülsenförmig mit einem zentralen Durchgang ausgebildet, der dem Rohrquerschnitt des zylindrischen Rohrkörpers entspricht, so dass ein Strömungsdurchgang von dem zylindrischen Rohrkörper durch das Einsatzstück gegeben ist. Die äußere Stirnseite des Einsatzstücks liegt entweder gegen einen Anschlussblock an oder aber gegen die äußere Stirnfläche eines in das Rohrende eines zweiten Rohres eingesteckten Einsatzstücks, so dass zwei Rohrenden über entsprechend zugeordnete Einsatzstücke miteinander verbunden werden können. Auf der Außenseite des mit der Aufweitung versehenen Rohrendes sind entsprechend konisch ausgebildete Klemmstücke angeordnet, die von einem Flanschteil übergriffen sind. Mittels entsprechender Schraubverbindungen ist dieses Flanschteil entweder mit dem Anschlussblock oder mit einem auf einem zweiten Rohrende angeordneten weiteren Flanschteil verschraubbar, so dass über das Anziehen der entsprechenden Verschraubungen die Rohrverbindung herstellbar ist. Entsprechend der konischen Form der Klemmstücke weist das Flanschteil an seiner die Klemmstücke umschließenden Innenfläche eine korrespondierende konische Form auf.

Aus der DE 860 583 C wie auch der DE 615 712 C sind vergleichbar aufgebaute Flanschverbindungen mit konisch ausgebildeten Aufweitungen und entsprechend zugeordneten Klemmringen bekannt.

Mit derartigen Rohranschlussvorrichtungen ist zunächst der Nachteil verbunden, dass der Übergang der konischen Aufweitung in den zylindrischen Rohrkörper eine Knickstelle aufweist, was bei hoher Schwingungsbeanspruchung des angeschlossenen Rohres beziehungsweise der miteinander verbundenen Rohre zu einer entsprechenden Bruchempfindlichkeit führen kann. Weiterhin hat sich ergeben, dass insbesondere bei großen Rohrdurchmessern und hohen Drücken bei der bekannten Rohranschlussvorrichtung die konische Aufweitung des Rohrkörpers dazu tendiert, in die zylindrische Rohrform auszuweichen und dadurch aus der Rohranschlussvorrichtung herauszurutschen.

Eine Rohrverbindung anderer Bauweise ist aus der GB 740 717 bekannt, bei der die Verbindung der Rohrenden über ein Schraubmutter-Gewindestutzen-System erfolgt. Hierbei werden auf der Außenseite der mit einer End-Aufweitung versehenen Rohrenden jeweils Klemmringe aufgesetzt, die ein Widerlager beziehungsweise ein Außengewinde für eine hülsenförmige Überwurfmutter aufweisen derart, dass die dem Klemmring des einen Rohrendes erfassende Überwurfmutter auf den am andere Rohrende befindlichen Klemmring mit Außengewinde aufgeschraubt wird und dadurch die Klemmringe und somit die Rohrenden gegeneinander zieht. Hierbei sind auch in die aufgeweiteten Rohrenden eingesetzte Einsatzstücke bekannt. Hierzu ist ferner aus der GB 416 733 A eine entsprechend aufgebaute Rohrverbindung bekannt, bei der die Rohraufweitung kurvenförmig ausgebildet ist und Einsatzstück und Klemmring eine dieser Form angepasste Gestaltung aufweisen. Mit dieser Rohrverbindung ist der Nachteil verbunden, dass - im Gegensatz zu der eingangs genannten Flanschverbindung - bei der Montage des Schraubmutter-Gewindestutzen-Systems eine Torsionsbewegung auf die End-Aufweitung der Rohre übertragen wird, die dazu führt, dass sich unter Umständen die zu verbindenden Rohre mitdrehen. Dieser Effekt ist in der Regel bei der Ausrichtung von miteinander zu verbindenden Rohren gegeneinander unerwünscht.

Der Erfindung liegt daher die Aufgabe zugrunde, eine den ISO-Normen 6162 bzw. 6164 entsprechende Flanschverbindung derart auszugestalten, dass gesondert herzustellende und anzuschweißende Rohrendstücke zur Aufnahme der genormten Flanschteile vermieden sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Aufweitung des Rohrendes eine trompetenförmige Kontur mit einer von dem äußeren Rohrende zum zylindrischen Rohrkörper ohne Ausbildung eines Knicks fließend verlaufenden, im Bereich des äußeren Endes der Aufweitung die größte Steilheit und im Bereich des Übergangs zum zylindrischen Rohrkörper die geringste Steilheit aufweisenden Linienführung aufweist und der Klemmring an seiner mit trompetenförmiger Innenkontur ausgebildeten, gegen die Aufweitung des Rohrendes anliegenden Innenfläche mit einer reibungserhöhenden Profilierung versehen ist, und dass der das Ende des Rohres umgreifende Klemmring auf seiner Außenseite mit einer in ein genormtes Standard-Flanschteil formschlüssig einsetzbaren Gestaltung versehen ist. Mit der Erfindung ist der Vorteil verbunden, dass aufgrund des fließenden Übergangs von der Aufweitung des Rohrendes zum zylindrischen Rohrkörper die Bruchgefahr durch Schwingungsbelastung reduziert ist, weil eine abrupte, enge Biegestelle vermieden ist. Da erfindungsgemäß die Kontur im Bereich des äußeren Endes der Aufweitung die größte Steilheit und im Bereich des Übergangs des zylindrischen Rohrkörper die geringste Steilheit aufweist, kann das Ende des Rohres durch den außen aufgesetzten Klemmring besser festgehalten werden, so dass auch bei großen Rohrdurchmessern und hohen Drücken eine entsprechende Sicherheit der Rohranschlussvorrichtung verwirklicht ist. Aufgrund des zum Rohrende über die trompetenförmige Kontur ansteigenden Steilheit des Rohrverlaufs ist ein Nachgeben des Rohrkörpers weitgehend vermieden.

Da der Klemmring an seiner mit trompetenförmiger Innenkontur ausgebildeten, gegen die Aufweitung des Rohrendes anliegenden Innenfläche mit einer reibungserhöhenden Profilierung versehen ist, ist hiermit der Vorteil verbunden, dass hierdurch der Klemmeffekt des Klemmringes insbesondere bei Rohren verstärkt wird, deren Oberfläche ein vorzeitiges Gleiten bei entsprechender Beanspruchung zulässt.

Ein weiterer Vorteil ergibt sich daraus, dass der jeweils einzusetzende Klemmring eine Außenkontur aufweist, die formschlüssig in ein genormtes ISO-Flanschteil passt oder darin einpressbar ist. Aus diesem Grunde kann ein beliebiger Standardflansch gemäß ISO-Normen 6162 bzw. 6164 verwendet werden.

Nach einem Ausführungsbeispiel der Erfindung ist vorgesehen, dass die trompetenförmige Kontur des Rohrendes in dem Übergang zum zylindrischen Rohrkörper parabelförmig ausgebildet ist; entsprechend andere Rundungsformen des Übergangs sind ebenfalls möglich.

Nach einem Ausführungsbeispiel der Erfindung kann vorgesehen sein, dass als reibungserhöhende Profilierung an der Innenfläche des Klemmringes Rillen mit dazwischen erhaben vorstehenden Zacken ausgebildet sein können.

In einer alternativen Ausführungsform kann vorgesehen sein, dass der Klemmring an seiner mit trompetenförmiger Innenkontur ausgebildeten Innenfläche mit einer reibwerterhöhenden Beschichtung, die aus einem auf die Innenfläche aufgebrachten Granulat bestehen kann, versehen ist.

Nach einem Ausführungsbeispiel der Erfindung ist vorgesehen, das das eine trompetenförmige Kontur aufweisende Einsatzstück einen in den zylindrischen Rohrkörper hineinreichenden zylindrischen Fortsatz aufweist. Hiermit ist der Vorteil verbunden, dass das Einsatzstück zusätzlich zu seiner formschlüssigen Anlage an der Aufweitung des Rohrendes axial und radial in dem anzuschließenden Rohr fixiert ist.

Nach einem Ausführungsbeispiel der Erfindung ist vorgesehen, dass das Einsatzstück auf seiner im Bereich seiner trompetenförmigen Kontur liegenden Außenfläche eine Nut zur Aufnahme einer Dichtung aufweist.

Weiterhin kann vorgesehen sein, dass das Einsatzstück an seiner äußeren Stirnfläche eine Nut zur Aufnahme einer Dichtung aufweist. Die Anordnung entsprechender Dichtungen an dem Einsatzstück ist im übrigen aus der zur Bildung der Gattung herangezogenen GB PS 1 232 938 bekannt.

Es kann vorgesehen sein, dass das Einsatzstück vor der Montage der Rohranschlussvorrichtung in das Rohrende eingepresst ist.

In der Zeichnung sind Ausführungsbeispiele der Erfindung wiedergegeben, welche nachstehend beschrieben sind. Es zeigen:
- Fig. 1: eine Rohranschlussvorrichtung mit einem Anschluss eines Rohres an einen Anschlussblock in montiertem Zustand in einer Schnittansicht,
- Fig. 2: den Gegenstand der Figur 1 in unmontiertem Zustand in einer auseinander gezogenen Darstellung der Einzelteile,
- Fig. 3: Klemmring und Flanschteil einer Rohranschlussvorrichtung in einer anderen Ausführungsform in einer Einzeldarstellung,
- Fig. 4: eine Rohranschlussvorrichtung zur Verbindung zweier Rohrenden miteinander in einer Darstellung entsprechend Figur 1.

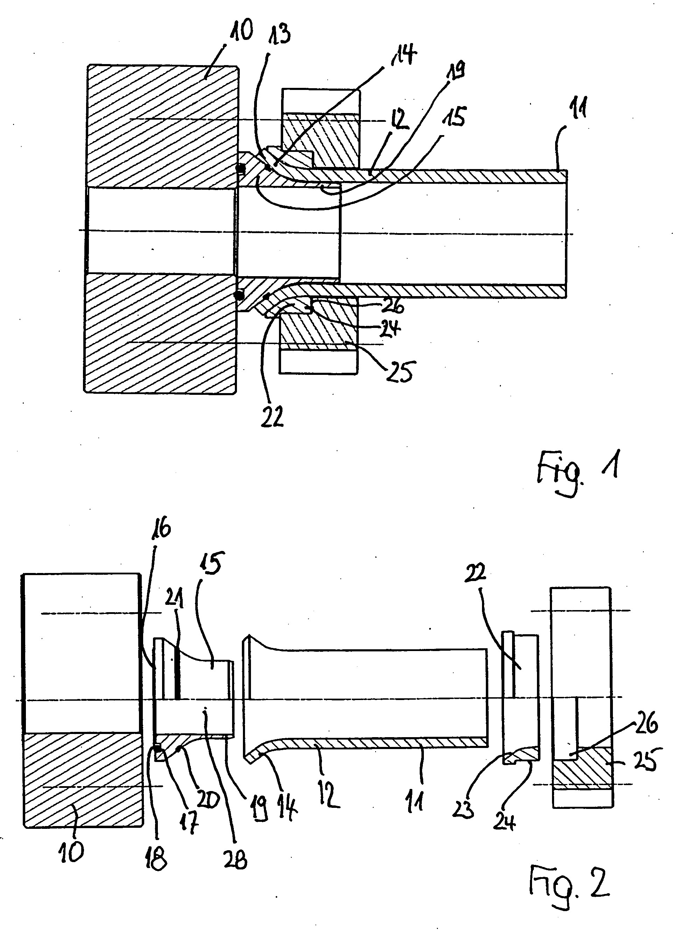

Wie sich zunächst aus Figur 1 ergibt, ist ein Rohr 11 mittels der erfindungsgemäßen Rohranschlussvorrichtung an einen Anschlussblock 10 angeschlossen. Das Rohr 11 weist einen zylindrischen Rohrkörper 12 auf, der in ein mit einer Aufweitung 14 versehenes Rohrende 13 übergeht. In das Rohrende 13 ist ein Einsatzstück 15 eingesteckt, dessen äußere, zum Anschlussblock 10 liegende Stirnfläche 16 bei montierter Rohranschlussvorrichtung gegen die Außenfläche des Anschlussblocks 10 anliegt und so die Verbindung des Rohres 11 mit dem Anschlussblock 10 herstellt. In der Stirnfläche 16 des Einsatzstücks 15 ist eine Nut 17 mit einer darin eingelegten Dichtung 18 ausgebildet, so dass eine dichtende Anlage des Einsatzstücks 15 gegen den Anschlussblock 10 gegeben ist. Das Einsatzstück 15 ist hülsenförmig ausgebildet und weist einen Durchgang 28 für das durch das Rohr 11 in den Anschlussblock 10 strömende Medium auf.

Die Aufweitung 14 des Rohrendes 13 ist in einer trompetenförmigen Kontur mit einer von dem äußeren Rohrende zum zylindrischen Rohrkörper 12 ohne Ausbildung eines Knicks fließend verlaufenden Linienführung ausgebildet, so dass enge Biegestellen oder Knicke vermieden sind. Entsprechend weist das in das Rohrende 13 eingesteckte Einsatzstück 15 auf seiner Außenseite eine korrespondierend zur Aufweitung 14 ausgebildete Gestalt mit einer ebenfalls trompetenförmigen Kontur auf. Zur besseren Führung des Einsatzstücks 15 in dem Rohrende 13 ragt das Einsatzstück 15 mit einem zylindrischen Fortsatz 19 in den zylinderischen Rohrkörper 12 hinein. Auf seiner im Bereich der Aufweitung 14 des Rohrendes 13 liegenden Außenfläche ist das Einsatzstück mit einer Nut 20 zur Aufnahme einer Dichtung 21 versehen, so dass eine dichtende Anlage des Einsatzstücks 1 gegen das Rohr 1 gewährleistet ist.

Zur Halterung des Rohrendes 13 mit dem darin eingesetzten Einsatzstück 15 gegen den Anschlussblock 10 ist auf die Außenseite des Rohrendes 13 ein Klemmring 22 aufgeschoben, dessen Innenfläche 23 eine zur Aufweitung 14 des Rohrendes 13 korrespondierende Kontur aufweist, also ebenfalls mit einem trompetenförmigen Verlauf ausgebildet ist. Auf seiner Außenseite ist der Klemmring 22 mit einer Stufe 24 versehen, so dass der durch die Stufe 24 verringerte und in eine Rechteckform gebrachte Außenquerschnitt des Klemmringes 22 in eine entsprechend stufenförmig ausgebildete Einziehung 26 eines den Klemmring 22 außen übergreifenden Flanschteils 25 einsetzbar beziehungsweise einpressbar ist. Bei dem Flanschteil 25 handelt es sich um ein handelsübliches, genormtes Standard-Flanschteil, beispielsweise entsprechend den ISO-Normen 6162 beziehungsweise 6164. Wie im einzelnen nicht dargestellt, ist das Flanschteil 25 über mehrere über seinen Umfang verteilt angeordnete Schrauben mit dem Anschlussblock 10 fest verschraubbar. Dabei wirkt die von der Verschraubung aufgebrachte Kraft von dem Flanschteil auf den Klemmring 22, der seinerseits diese Kraft auf die Aufweitung 14 des Rohrendes 13 überträgt, wobei das Rohrende 13 das Einsatzstück 15 in dichtende Anlage an dem Anschlussblock 10 drückt.

Die vorstehend beschriebenen Einzelteile der Rohranschlussvorrichtung sind aus Figur 2 besser ersichtlich, wobei das Flanschteil bei dem in Figuren 1 und 2 dargestellten Ausführungsbeispiel als flaches Flanschteil ausgebildet ist.

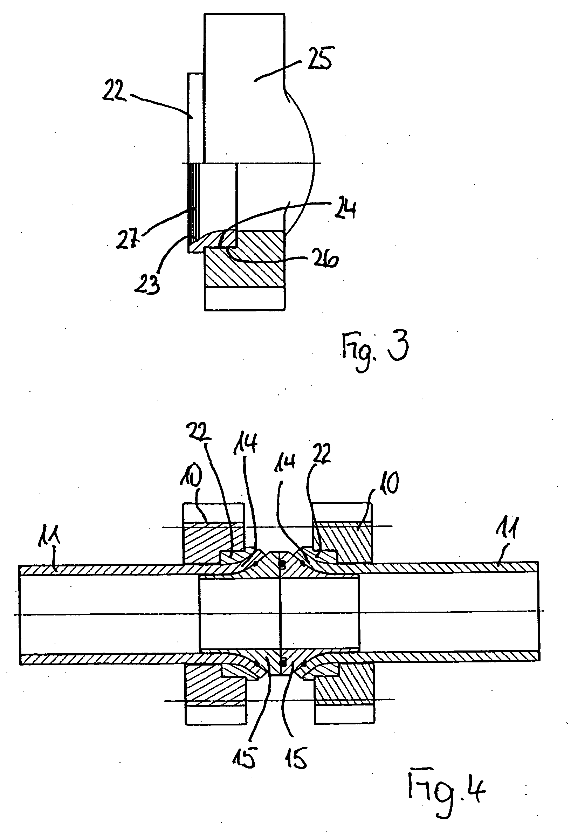

Wie sich aus Figur 3 ergibt, kann das Flanschteil aber auch als ein handelsübliches Flanschteil in gewölbter Ausführung ausgebildet sein, wobei bei dem in Figur 3 dargestellten Ausführungsbeispiel der Klemmring 22 an seiner gegen die Aufweitung 14 des Rohrendes 13 anliegenden Innenfläche 23 mit einer Profilierung 27 versehen ist. Diese Profilierung kann beispielsweise durch an der Innenfläche 23 des Klemmringes 22 angeordnete Rillen mit dazwischen erhaben vorstehenden Zacken ausgebildet sein.

Wie sich aus Figur 4 ergibt, können auch zwei Rohre 11 miteinander durch entsprechende Rohranschlussvorrichtungen verbunden werden, wobei dann auf beiden Rohren wie beschrieben Flanschteile 25 angeordnet sind, die mittels einer entsprechenden Verschraubung miteinander verbunden werden derart, dass mittels der aufgebrachten Kräfte die in den beiden Rohrenden sitzenden Einsatzstücke 15 gegeneinander gepresst sind. Wie aus Figur 4 ersichtlich, sind dabei die Einsatzstücke 15 nicht identisch ausgebildet insoweit, als nur eines der beiden Einsatzstücke 15 an seiner Stirnseite mit einer entsprechenden Dichtung 18 versehen ist; aus Dichtungsgründen ist die Stirnseite 16 des anderen (in der Darstellung der Figur 4 linken) Einsatzstückes 15 glatt ausgeführt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Rohranschlussvorrichtung umfassend eine Flanschverbindung mit einem Rohr, einem auf der Außenseite des anzuschließenden Rohres angeordneten, mittels wenigstens zweier Schrauben an ein Gegenstück anschraubbaren Flanschteil und mit einem in das mit einer Aufweitung versehene Ende des anzuschließenden Rohres eingesteckten hülsenförmigen Einsatzstück, welches in seiner Außenkontur an die Kontur der Aufweitung des Rohrendes angepasst ist und an seiner äußeren Stirnfläche die Anschlussfläche für die Rohrverbindung ausbildet, wobei der anschraubbare Flanschteil einen zusätzlich außen auf das aufgeweitete Rohrende aufgeschobenen, in seiner Innenkontur an die Kontur der Aufweitung des Rohrendes angepassten Klemmring übergreift, wobei die Aufweitung (14) des Rohrendes (13) eine trompetenförmige Kontur mit einer von dem äußeren Rohrende zum zylindrischen Rohrkörper (12) ohne Ausbildung eines Knicks fließend verlaufenden, im Bereich des äußeren Endes der Aufweitung (14) die größte Steilheit und im Bereich des Übergangs zum zylindrischen Rohrkörper (12) die geringste Steilheit aufweisenden Linienführung aufweist, **dadurch gekennzeichnet, dass** der Klemmring (22) an seiner mit trompetenförmiger Innenkontur ausgebildeten, gegen die Aufweitung (14) des Rohrendes (13) anliegenden Innenfläche (23) mit einer reibungserhöhenden Profilierung (27) versehen ist, und dass der das Ende des Rohres (12) umgreifende Klemmring (22) auf seiner Außenseite mit einer in ein genormtes Standard-Flanschteil (25) formschlüssig einsetzbaren Gestaltung (24) versehen ist.

2. Rohranschlussvorrichtung nach Anspruch 1, **dadurch gekennzeichnet, dass** die trompetenförmige Kontur des Rohrendes (13) in dem Übergang zum zylindrischen Rohrkörper (12) parabelförmig ausgebildet ist.

3. Rohranschlussvorrichtung nach Anspruch 1 oder 2, **dadurch gekennzeichnet, dass** an der Innenfläche (23) des Klemmringes (22) Rillen mit dazwischen erhaben vorstehenden Zacken ausgebildet sind.

4. Rohranschlussvorrichtung nach Anspruch 1 oder 2, **dadurch gekennzeichnet, dass** die Innenfläche (23) des Klemmringes (22) mit einer reibwerterhöhenden Beschichtung versehen ist.

5. Rohranschlussvorrichtung nach Anspruch 4, **dadurch gekennzeichnet, dass** die Beschichtung aus einem auf die Innenfläche (23) aufgebrachten Granulat besteht.

6. Rohranschlussvorrichtung nach einem der Ansprüche 1 bis 5, **dadurch gekennzeichnet, dass** das eine trompetenförmige Kontur aufweisende Einsatzstück (15) einen in den zylindrischen Rohrkörper (12), hineinreichenden zylindrischen Fortsatz (19) aufweist.

7. Rohranschlussvorrichtung nach einem der Ansprüche 1 bis 6, **dadurch gekennzeichnet, dass** das Einsatzstück (15) auf seiner im Bereich seiner troinpetenförmigen Kontur liegenden Außenfläche eine Nut (20) zur Aufnahme einer Dichtung (21) aufweist.

8. Rohranschlussvorrichtung nach einem der Ansprüche 1 bis 7, **dadurch gekennzeichnet, dass** das Einsatzstück (15) an seiner äußeren Stirnfläche (16) eine Nut (17) zur Aufnahme einer Dichtung (18) aufweist.

9. Rohranschlussvorrichtung nach einem der Ansprüche 1 bis 8, **dadurch gekennzeichnet, dass** das Einsatzstück (15) vor der Montage der Rohranschlussvorrichtung in das Rohrende (13) eingepresst ist.

## Claims

1. Pipe connection device having a flange assembly with a pipe, a flange piece, screwable by means of at least two screws onto a counterpiece, arranged on the outside of the pipe to be connected, and with a sleeve formed insert piece, inserted into the end of the pipe to be connected which is provided with a widening end whereas the insert piece is matching in its outer contour the contour of the widening of the pipe end and is forming the contact surface on its outside face surface for the pipe connection, whereby the screwable flange piece overlaps an additional clamp ring, with its inner contour matching the widening of the pipe end and whereby the widening (14) of the pipe end (13) has a trumpet formed contour, with a flowing course contouring from the outer pipe end to the cylindrical pipe body (12) without the development of a kink, with the highest gradient in the area of the outer end of the widening (14) and the lowest gradient in the area of the transition to the cylindrical pipe body (12) **characterized in that** the clamp ring (22) on its inner surface (23) having a trumpet formed inner contour and laying against the widening (14) of the pipe end (13) has a friction increasing profile (27) and that the clamp ring (22) overlapping the end of the pipe (12) is provided with form fitting configuration (24) insertable into a commercial standard flange piece (25).

2. Pipe connection device according to claim 1, **characterized in that** the trumpet formed contour of the pipe end (13) has a parabola shape in the transition to the cylindrical pipe body (12).

3. Pipe connection device according to claim 1 or 2, **characterized in that** grooving with embossed protruding cusps in between are constructed on the inner surface (23) of the clamp ring (22).

4. Pipe connection device according to claim 1 or 2, **characterized in that** the inner surface (23) of the clamp ring (22) has a friction increasing coating.

5. Pipe connection device according to claim 4, **characterized in that** the coating consists of granules applied to the inner surface (23).

6. Pipe connection device according to one of the claims 1 to 5, **characterized in that** the insert piece (15) showing a trumpet formed contour has a cylindrical protrusion (19) extending into the cylindrical pipe body (12).

7. Pipe connection device according to one of the claims 1 to 6, **characterized in that** the insert piece (15) has a groove (20) on its outer surface in the area of its trumpet shape contour for retaining of a seal (21).

8. Pipe connection device according to one of the claims 1 to 7, **characterized in that** the insert piece (15) has a groove (17) on its outer face surface (16) for retaining of a seal (18).

9. Pipe connection device according to one of the claims 1 to 8, **characterized in that** the insert piece (15) is pressed into the pipe end (13) before the assembly of the pipe connection device.

## Revendications

1. Dispositif de connexion de tuyaux comprenant une liaison par bride avec un tuyau, une partie de bride disposée sur le côté extérieur du tuyau à connecter, pouvant être vissée à l'aide d'au moins deux vis sur une pièce antagoniste et avec une pièce d'insertion en forme de douille insérée dans l'extrémité pourvue d'un élargissement du tuyau à connecter, dont le contour extérieur est adapté au contour de l'élargissement de l'extrémité de tuyau et laquelle pièce réalise la surface de connexion pour la liaison de tuyaux sur sa surface frontale extérieure, dans lequel la partie bridée pouvant être vissée recouvre un anneau de serrage, dont le contour intérieur est adapté au contour de l'élargissement de l'extrémité de tuyau, et qui est enfilé en outre à l'extérieur sur l'extrémité de tuyau élargie, dans lequel l'élargissement (14) de l'extrémité de tuyau (13) présente un contour en forme de trompette avec un guidage linéaire s'étendant de manière fluide de l'extrémité de tuyau extérieure au corps de tuyau cylindrique (12) sans réalisation d'un coude, présentant dans la zone de l'extrémité extérieure de l'élargissement (14) la plus grande pente et dans la zone du passage au corps de tuyau (12) cylindrique la plus faible pente, **caractérisé en ce que** l'anneau de serrage (22) est pourvu d'un profilage (27) augmentant le frottement sur sa surface intérieure (23) reposant contre l'élargissement (14) de l'extrémité de tuyau (13), réalisée avec un contour intérieur en forme de trompette, et **en ce que** l'anneau de serrage (22) entourant l'extrémité du tuyau (12) est pourvu, sur son côté extérieur, d'une structure (24) pouvant être insérée positivement dans une partie de bride standard (25) normalisée.

2. Dispositif de connexion de tuyaux selon la revendication 1, **caractérisé en ce que** le contour en forme de trompette de l'extrémité de tuyau (13) est réalisé en forme de parabole dans le passage au corps de tuyau cylindrique (12).

3. Dispositif de connexion de tuyaux selon la revendication 1 ou 2, **caractérisé en ce que** des rainures avec des dents dépassant au milieu de manière convexe sont réalisées sur la surface intérieure (23) de l'anneau de serrage (22).

4. Dispositif de connexion de tuyaux selon la revendication 1 ou 2, **caractérisé en ce que** la surface intérieure (23) de l'anneau de serrage (22) est pourvue d'un revêtement augmentant la valeur de frottement.

5. Dispositif de connexion de tuyaux selon la revendication 4, **caractérisé en ce que** le revêtement se compose d'un granulat appliqué sur la surface intérieure (23).

6. Dispositif de connexion de tuyaux selon l'une quelconque des revendications 1 à 5, **caractérisé en ce que** la pièce d'insertion (15) présentant un contour en forme de trompette présente un prolongement (19) cylindrique parvenant dans le corps de tuyau (12) cylindrique.

7. Dispositif de connexion de tuyaux selon l'une quelconque des revendications 1 à 6, **caractérisé en ce que** la pièce d'insertion (15) présente une rainure (20) pour le logement d'une garniture (21) sur sa surface extérieure se trouvant dans la zone de son contour en forme de trompette.

8. Dispositif de connexion de tuyaux selon l'une quelconque des revendications 1 à 7, **caractérisé en ce que** la pièce d'insertion (15) présente une rainure (17) pour le logement d'une garniture (18) sur sa surface frontale (16) extérieure.

9. Dispositif de connexion de tuyaux selon l'une quelconque des revendications 1 à 8, **caractérisé en ce que** la pièce d'insertion (15) est enfoncée avant le montage du dispositif de connexion de tuyaux dans l'extrémité de tuyau (13).
